# DEMANDE DE BREVET EUROPEEN

(11) **EP 1 728 605 A1**
(43) Date de publication de la demande: **06.12.2006**
(21) Numéro de dépôt: 06290723.3
(22) Date de dépôt: 05.05.2006
(51) Int. Cl.: B27B 17/00, B62B 1/20

(54) **Brouette à ridelles permettant de manutentionner, conditionner et transporter du bois**

(30) Priorité: 30.05.2005 FR 0505435
(71) Demandeur: Bellarbre, Raymond, 87220 Boisseuil (FR)
(72) Inventeur: Bellarbre, Raymond, 87220 Boisseuil (FR)
(74) Mandataire: Debay, Yves

(57) **Abrégé**

L'invention concerne une brouette ou analogue, comprenant une structure porteuse (5) définissant au moins une zone de support et prolongé par des bras (16), des moyens de roulement comprenant une roue (14) disposée sous la zone de support et mobile en rotation selon un axe déterminé (Y), des ridelles (R1, R2) latérales solidaires de la structure porteuse et s'étendant selon une direction ascendante à composante verticale depuis la zone de support, caractérisée en ce que les ridelles (R1, R2) à composante latérale sont fixées de façon amovible sur ladite zone de support et comprennent au moins deux ensembles d'éléments tubulaires (11, 12, 13) séparés par un espacement transversal (E).

Cette brouette légère et démontable permet de récupérer, manutentionner et conditionner du bois. Une découpe de morceaux à 50 cm (taille standard pour bois de chauffage) est permise en passant la lame d'une tronçonneuse dans l'espacement (E).

## Description

La présente invention concerne le domaine des véhicules ou moyens de transport de charge à traction manuelle, non motorisés, tels que charrettes, diables ou brouettes. La présente invention concerne plus particulièrement une brouette à ridelles permettant de manutentionner, conditionner et transporter des matériaux de toute nature.

Il est connu pour de multiples usages, par exemple dans l'horticulture, le domaine forestier ou le bâtiment, des moyens de transport de charge constitués d'un châssis supportant un plateau ou conteneur pour recevoir la charge. Le châssis est généralement prolongé par deux brancards de préhension manuelle et repose sur des moyens de roulement. Lorsque ces moyens de roulement sont constitués d'une roue unique, disposée en avant du support de la charge, du coté opposé aux brancards, on est en présence d'une brouette. Lorsque les moyens de roulement sont constitués de deux roues latérales, on réalise une charrette à bras. La présente invention s'applique préférentiellement au domaine des brouettes monoroue, plus maniable et permettant de circuler sur une voie étroite ou de suivre des parcours tourmentés, mais peut également s'étendre au domaine des véhicules supportant une charge plus lourde.

Dans de nombreuses applications, par exemple pour l'exécution de travaux manuels extérieurs, tels que ramassage et transport de bois de chauffage ou autre matériau volumineux, la brouette n'assure qu'une fonction de transport. Or il existe un besoin pour réduire les manipulations fastidieuses de matériaux volumineux et généralement lourds.

Il est connu, par le document EP 1 342 542, un véhicule de transport faisant office de support de sciage de bois grâce à des éléments de retenue disposés à l'avant et à l'arrière du véhicule. Un inconvénient majeur de ce type de véhicule est son instabilité sur des terrains pentus et les problèmes d'inertie polaire lors du transport. En effet, le bois disposé transversalement aura toujours tendance à faire pencher l'ensemble d'un côté ou l'autre. De plus, il est nécessaire de prévoir un équipement complexe pour surélever la roue de façon à stabiliser l'ensemble pour une phase de découpe.

Il est également connu, par le document US 4 437 368, un dispositif de transport roulant qui comprend un alignement de barres verticales surmontées d'étriers recevant des morceaux de bois. Ce type de véhicule est encombrant en hauteur et en longueur. Un nombre élevé d'étriers (par exemple 12 étriers) est nécessaire pour éviter des chutes de bois tombant du véhicule, faute de support. On comprend donc qu'il est particulièrement difficile de circuler en forêt, entre les arbres, sur des terrains pentus, avec ce genre de dispositif.

La présente invention a donc pour objet de pallier un ou plusieurs des inconvénients de l'art antérieur en définissant une brouette compacte facile d'usage permettant de faciliter les opérations de manutention, de conditionnement et de transport de matériaux volumineux.

Un objectif supplémentaire de l'invention est de proposer une brouette de type démontable adaptée à une grande variété d'applications, et dont le stockage est peu encombrant.

L'invention propose à cet effet un véhicule à traction manuelle de type brouette pour transporter un contenu, comprenant une structure porteuse définissant au moins une zone de support et prolongée par des bras, des moyens de roulement comprenant au moins une roue disposée sous la zone de support et mobile en rotation selon un axe déterminé, des ridelles latérales solidaires de la structure porteuse, caractérisé en ce que la structure porteuse comprend des éléments répartis de part et d'autre d'un plan médian perpendiculaire à l'axe de rotation de la roue pour supporter les ridelles latérales qui s'étendent selon une direction ascendante à composante verticale depuis la zone de support, les ridelles étant fixées de façon amovible sur lesdits éléments répartis et comprenant au moins deux ensembles d'éléments tubulaires séparés par un espacement transversal incluant un plan sensiblement vertical parallèle à l'axe de rotation de la roue.

Ainsi, l'invention propose avantageusement une brouette ou véhicule analogue facile à manoeuvrer et permettant des opérations de découpe transversale du contenu, par exemple du bois, directement sur la brouette à travers l'espacement entre les deux ensembles à ridelles. Il en résulte un gain de temps et la suppression de manipulations fastidieuses. De plus, les ensembles d'éléments tubulaires sont facilement démontables, ce qui permet de réduire l'encombrement de la brouette pour des phases de transport en voiture ou pour son stockage.

Selon une autre particularité, des arceaux des ridelles sont disposés latéralement sur le véhicule.

Selon une autre particularité, les ensembles d'éléments tubulaires comportent chacun :
- deux portions en U de support et de retenue latérale du contenu à transporter, comprises dans un plan parallèle à l'axe de rotation de la roue ;
- des portions de raccordement entre lesdites portions en U ; et
- des moyens de fixation prévus pour le rattachement d'un ensemble d'éléments tubulaires à la structure porteuse.

Ainsi, la retenue latérale des ridelles est permise efficacement par des éléments tubulaires de faible poids, ce qui facilite notamment l'opération de démontage des ridelles. Les éléments tubulaires verticaux s'élèvent à une hauteur élevée, de sorte qu'une quantité importante d'objets, de matériaux de type volumineux peut être transportée. L'invention permet le transport d'une charge de l'ordre de 200 Kg.

Selon une autre particularité, les ridelles comprennent des paires d'arceaux en vis-à-vis, des portions de raccordement formant avec les branches des portions en U lesdits arceaux.

Ainsi, la brouette ne nécessite pas de caisse, le volume compris entre les arceaux permettant de recevoir directement les objets ou matériaux volumineux à transporter.

Selon une autre particularité, la zone de support est également séparée en deux par un décrochement dans le prolongement du plan de l'espacement transversal, ce décrochement étant destiné à recevoir un élément mobile consommable.

Selon une autre particularité, l'espacement transversal est suffisamment grand pour permettre de poser transversalement un élément mobile consommable à taquets sur la zone de support, entre deux ensembles d'éléments tubulaires, l'élément mobile ayant une épaisseur suffisante de l'ordre de 2 cm et une largeur suffisante supérieure à 10 cm pour protéger la structure porteuse lors d'une découpe effectuée à travers ledit espacement vertical.

Selon une autre particularité, la structure porteuse comporte une paire de pieds en forme de U, chaque pied étant relié d'une part, par une branche avant du U, à une première ossature en C formant une bordure extérieure de la structure porteuse et d'autre part, par une branche arrière du U, à une seconde ossature de type brancard comprenant deux tubes parallèles pour supporter les moyens de roulement, une première traverse disposée devant la roue reliant les deux tubes de la seconde ossature.

Selon une autre particularité, des béquilles sont rattachées à la première ossature, chaque bord latéral de la première ossature étant doté d'un support d'articulation d'une béquille selon un axe de rotation concourant avec l'axe de rotation de la roue, permettant de positionner la béquille entre la première ossature et la roue en position repliée.

Selon une autre particularité, une seconde traverse plus longue que la première traverse est prévue pour relier deux extrémités libres des tubes de la seconde ossature, ces extrémités libres comprenant des moyens pour fixer de façon amovible des bras.

Selon une autre particularité, la première ossature et la seconde ossature sont en partie coplanaires, les deux ossatures comprenant des segments parallèles reliés par des traverses pour former dans un plan longitudinal la zone de support de la structure porteuse.

Selon une autre particularité, chacun des ensembles d'éléments tubulaires des ridelles comprend des éléments de fixation sur une desdites portions en U pour recevoir une ridelle d'extrémité avant ou arrière.

Selon une autre particularité, lesdits éléments de fixation comprennent des logements formés le long d'une branche verticale d'une portion en U, une ridelle d'extrémité comprenant deux paires de crochets orientés selon une direction verticale descendante pour venir s'insérer dans lesdits logements.

Ainsi, il est permis selon l'invention d'ajouter le cas échéant une ridelle frontale et une ridelle arrière pour éviter le glissement des objets transportés.

Selon une autre particularité, le véhicule comprend des moyens de fixation amovible pour fixer chaque ensemble d'éléments tubulaires à la structure porteuse, ces moyens de fixation amovible comportant des éléments d'ancrage dans l'extrémité de la première ossature, dans les traverses reliant les deux ossatures et dans la seconde traverse.

Selon une autre particularité, le véhicule comprend au moins une béquille de stabilisation au sol de type repliable, des moyens de rappel élastique étant prévus pour rabattre automatiquement la béquille vers une direction arrière lorsque le véhicule est avancé.

Selon une autre particularité, la béquille est en L et comprend dans sa partie supérieure une articulation avec un axe horizontal de façon à ce que la partie inférieure de contact au sol de la béquille, en position dépliée, dépasse des bords longitudinaux de la structure porteuse du véhicule.

Selon une autre particularité, le véhicule comprend un conteneur amovible en matériau de type toile ou bâche doté d'au moins une collerette prévue pour coopérer avec un bord supérieur des arceaux, l'écartement entre les arceaux des ridelles latérales étant sensiblement constant et inférieur à 65 cm.

Le véhicule permet ainsi le transport d'éléments peu volumineux.

Selon une autre particularité, les ridelles amovibles sont remplacées par au moins un ensemble à plateau amovible disposé à l'opposé des bras, au-delà de l'espacement transversal, pour que le véhicule constitue un diable.

L'invention, avec ses caractéristiques et avantages, ressortira plus clairement à la lecture de la description faite en référence aux dessins annexés donnés à titre d'exemples non limitatifs dans lesquels :
- la figure 1 montre une vue en perspective d'une brouette à ridelles conforme à l'invention ;
- la figure 2 représente la brouette de la figure 1, munie de ridelles frontale et arrière ;
- les figures 3A et 3B représentent schématiquement l'articulation d'une béquille équipant le véhicule selon l'invention ;
- les figures 4A et 4B représentent, respectivement, une vue de profil et une vue en coupe selon le plan A-A d'une brouette à l'arrêt dans un mode de réalisation de l'invention ;
- la figure 5 montre une vue en perspective de la structure porteuse du véhicule selon l'invention ;
- la figure 6 représente une vue en perspective d'un conteneur pouvant être utilisé dans l'invention ;
- la figure 7 montre en perspective un exemple de montage et verrouillage des ridelles amovibles ;
- les figures 8A et 8B illustrent respectivement l'association bêche et béquille pour former un polygone d'appui pour le véhicule ;
- la figure 9 illustre une utilisation du véhicule selon l'invention sous la forme d'un diable ;
- la figure 10 illustre une utilisation du véhicule selon l'invention sous la forme d'un chariot.

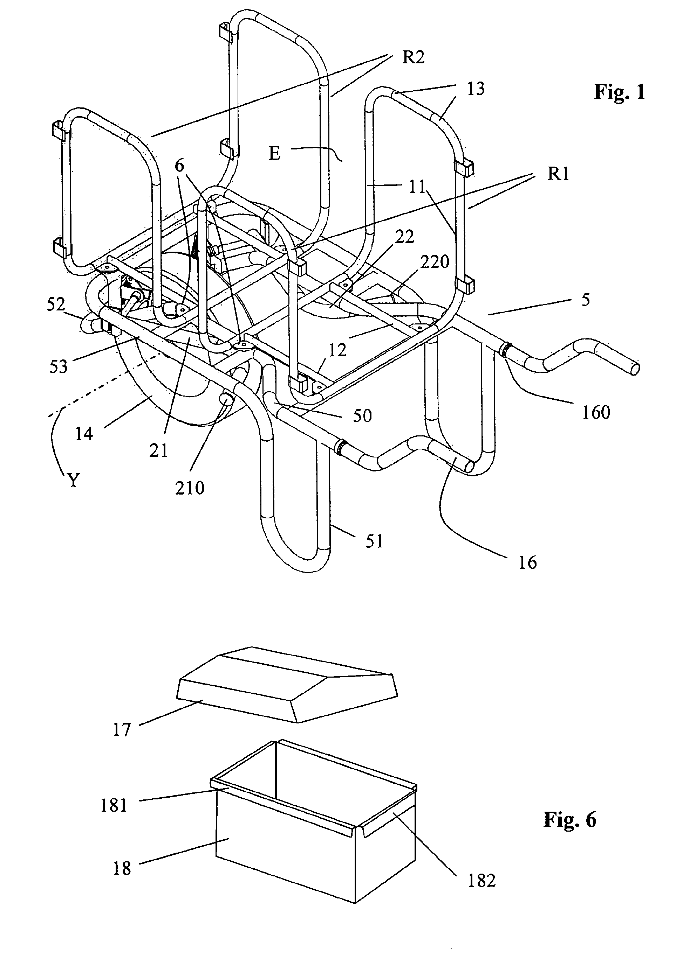

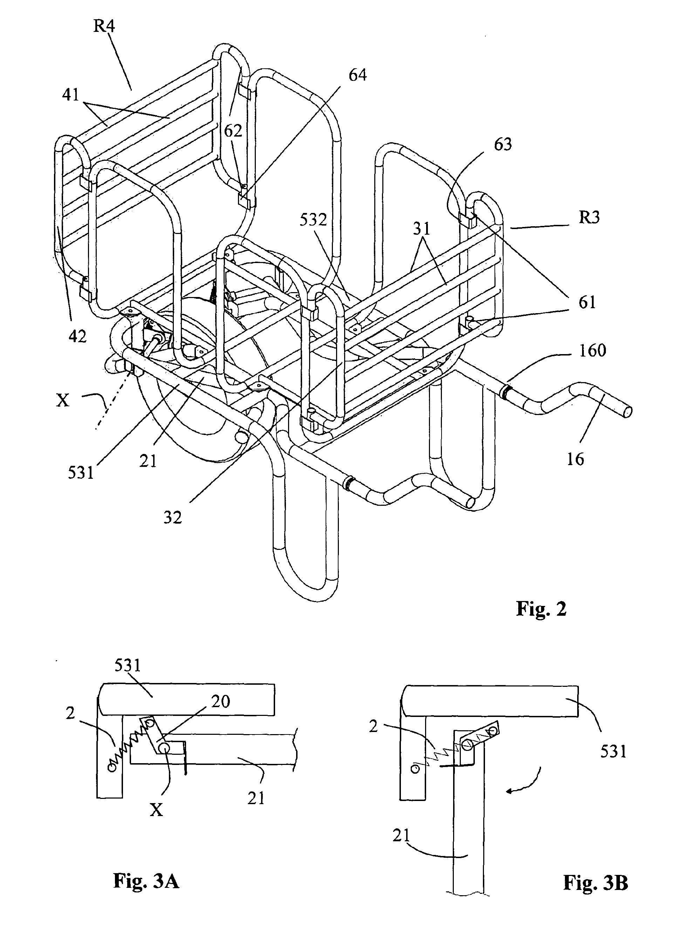

Conformément à l'invention, et comme le montrent les figures 1 et 2 des dessins annexés, la structure porteuse (5) de la brouette ou véhicule de manutention similaire est principalement constituée par un brancard (50, 16), des moyens de roulement de type châssis roulant, des pieds (51) reliés au brancard (50, 16), et des ridelles (R1, R2) principales formant les côtés de retenue de la charge de la brouette. La structure porteuse (5) définit au moins une zone de support et est prolongée par des bras (16) permettant la traction manuelle de la brouette. Les moyens de roulement sont dotés d'au moins une roue (14) disposée sous la zone de support, mobile en rotation selon un axe déterminé (Y) qui est perpendiculaire à la direction dans laquelle s'étendent les bras (16) et les éventuelles poignées. La roue (14) est par exemple dotée d'un pneu renforcé avec 6 plis à crampons et montée sur roulements à billes. Les ridelles (R1, R2) latérales sont solidaires de la structure porteuse (5) et s'étendent verticalement selon une direction ascendante depuis la zone de support.

Selon une caractéristique de l'invention, les ridelles (R1, R2) principales sont fixées de façon amovible sur la zone de support. Une ou plusieurs liaisons transversales reliant des arceaux assemblés par paire (arceau de gauche et arceau de droite) permettent par exemple cette fixation. En référence à la figure 1, les ridelles (R1, R2) principales comprennent au moins deux ensembles d'éléments tubulaires (11, 12, 13) formant chacun une structure de retenue latérale du contenu de la brouette. Un premier ensemble d'éléments tubulaires (11, 12, 13) constitue un jeu de ridelles latérales arrière (R1), tandis qu'un second ensemble identique ou similaire au premier ensemble (11, 12, 13) constitue un jeu de ridelles latérales avant (R2).

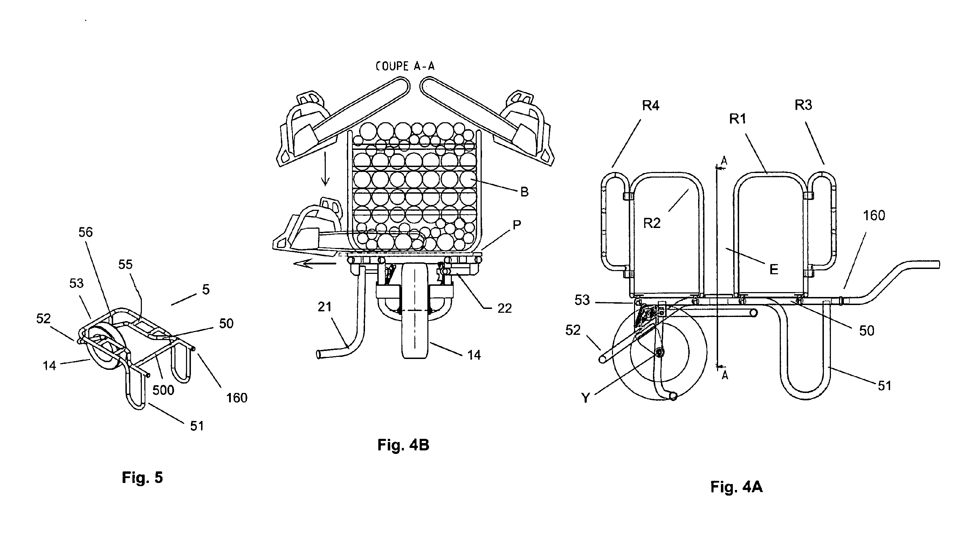

Les deux ensembles d'éléments tubulaires (11, 12, 13) sont séparés par un espacement transversal (E). En référence à la figure 4A, cet espacement (E) inclut un plan (A-A) sensiblement vertical parallèle à l'axe (Y) de rotation de la roue (14). Dans un mode de réalisation préféré de l'invention, les ensembles d'éléments tubulaires (11, 12, 13) comportent chacun deux portions (11) en U de support et de retenue latérale du contenu à transporter. Ces portions (11) en U sont chacune comprises dans un plan parallèle à l'axe (Y) de la roue (14). Des portions (12, 13) transversales sont prévues entre ces portions (11) en U pour raccorder ces dernières. Certaines de ces portions de raccordement (13) forment avec les branches des portions (11) en U lesdits arceaux. Ces portions de raccordement (13) prolongent par exemple les portions (11) en U, via une courbure. Un tube cintré peut constituer une portion (11) en U et deux courbures supplémentaires du tube aux extrémités du U permettent de prolonger le tube et de raccorder celui-ci à un tube de dimensions identiques. Un morceau de tube assure par exemple la jonction entre les portions de raccordement (13) de tubes distincts. D'autres portions de raccordement (12), formés de tubes droits ou éléments analogues, sont associées à des moyens de fixation (6) qui permettent de rattacher un ensemble d'éléments tubulaires (11, 12, 13) à la structure porteuse (5). Les éléments verticaux des portions en U peuvent s'élever d'une hauteur de l'ordre de 30 cm à 1 m par rapport à la structure porteuse (5). Dans un mode de réalisation de l'invention, ces éléments mesurent environ 60 cm et culminent à une hauteur maximale de l'ordre de 1 m par rapport au niveau du sol.

Comme illustré aux figures 1 et 2, les deux ensembles d'éléments tubulaires (11, 12, 13) sont alignés l'un derrière l'autre, suivant la longueur de la brouette. Plus de deux ensembles (11, 12, 13) peuvent être utilisés dans une variante de réalisation. Dans les ridelles (R1, R2) principales, les arceaux d'un même ensemble (11, 12, 13) sont disposés en vis-à-vis, avec par exemple un écartement sensiblement constant et inférieur à 65 cm. Cet écartement peut être de l'ordre de 50-60 cm. Les portions de raccordement (13) d'un arceau s'étendent par exemple sur une longueur de 50 cm. Il est donc permis de couper des morceaux de bois à 50 cm (taille standard pour bois de chauffage) en passant la lame d'une tronçonneuse entre deux ridelles latérales (R1, R2) consécutives séparées par l'espacement transversal (E).

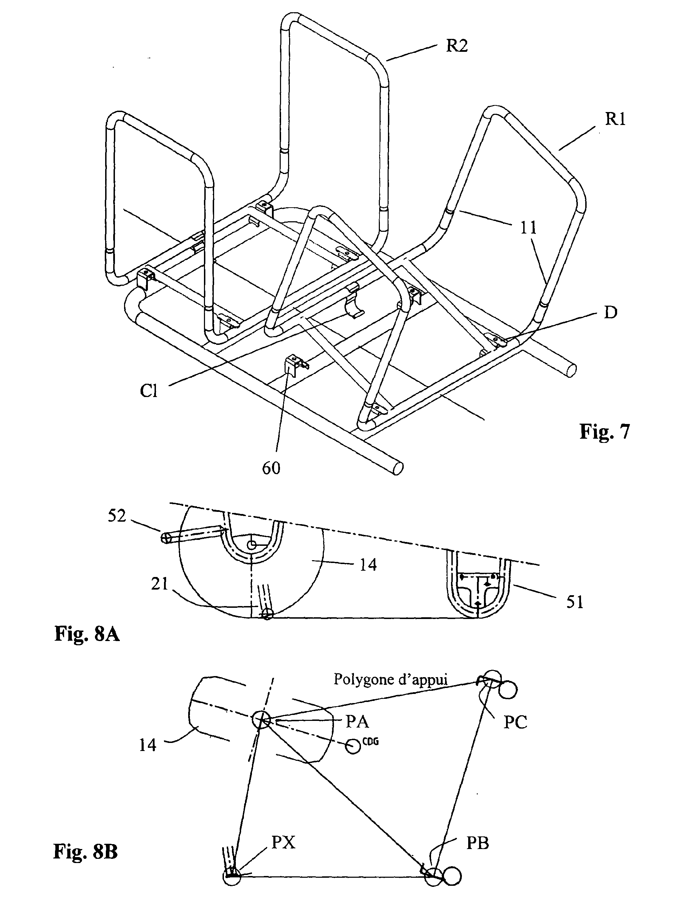

En référence à la figure 7, le verrouillage des ridelles principales (R1, R2) peut s'effectuer à l'aide d'un organe de clipsage (CI) en C monté sur la base d'une des portions (11) en U. Après avoir calé une portion (11) en U des ridelles latérales (R1, R2) formant berceau à l'aide d'un ou plusieurs doigts de blocage (D) à composante horizontale montés sur la structure porteuse (5), l'autre portion (11) en U est rattachée à un élément transversal de la structure porteuse (5) via l'organe de clipsage (CI), comme illustré à la figure 7. Les ridelles (R1, R2) se montent par un mouvement de rotation lorsque la première portion (11) en U a été calée contre les doigts (D) de blocage. L'autre portion (11) en U est alors abaissée pour venir enserrer une ou plusieurs butées (60). Dans l'exemple de la figure 7, ces butées (60) peuvent être associées à des surfaces placées sous les doigts de blocage (D) pour s'opposer à un mouvement de translation horizontal des ridelles (R1, R2). L'organe de clipsage (CI) et les doigts de blocage (D) s'opposent à la rotation ou au soulèvement des ridelles (R1, R2).

Comme illustré aux figures 4A et 4B, l'espacement transversal (E) est suffisamment grand pour permettre de poser transversalement un élément mobile (P) à taquets de type consommable sur la zone de support, entre deux ensembles d'éléments tubulaires (11, 12, 13). La zone de support est séparée en deux par un décrochement dans le prolongement du plan (A-A) de l'espacement transversal (E), ce décrochement étant destiné à recevoir l'élément mobile (P) consommable. Cet élément mobile (P), formé par exemple par une planchette à deux taquets qui a une largeur supérieure à 10 cm (de préférence au moins une douzaine de centimètres), permet de protéger la structure porteuse (5) lors d'une découpe effectuée à travers ledit espacement vertical (E). L'épaisseur de cet élément mobile (P) est suffisante, par exemple de l'ordre de 2 cm ou plus, pour assurer ladite protection.

On comprend qu'un tel élément mobile (P) remplit à la fois une fonction de protection et une fonction de témoin de fin de coupe (la planchette glisse par exemple de 4 cm vers l'utilisateur). Les morceaux de bois à découper peuvent être récupérés et placés entre les ridelles (R1, R2), avec leur extrémité arrière positionnée en léger retrait par rapport aux ridelles latérales arrière (R1). La découpe du bois (B) peut alors être réalisée à travers l'espacement (E) entre ridelles latérales arrière (R1) et ridelles latérales avant (R2), ce qui permet de produire 0,3 m³ de bois coupé à 50 cm en une seule fois avec une lame de 55 cm ou en 2 fois en pivotant de 180° autour de la brouette, avec dans ce cas une lame de 40 cm au minimum.

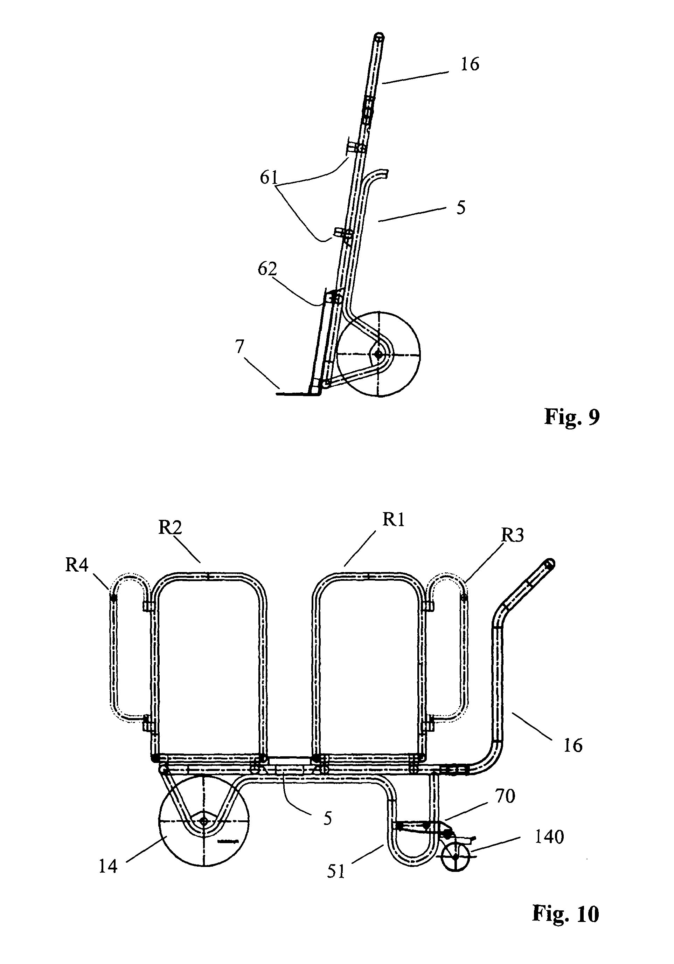

Dans le mode de réalisation de la figure 5, la structure porteuse (5) comporte une paire de pieds (51) en forme de U, appelés également bêches. Ces pieds permettent d'assurer un freinage du véhicule et servent également de maintien du véhicule dans une pente (maintien par le pied « aval » lorsque le véhicule est orienté perpendiculairement à la pente). Chaque pied (51) est relié, par une branche avant du U, à une première ossature (53) en C formant une bordure extérieure de la structure porteuse (5). La branche arrière du U relie le pied (51) à une seconde ossature (50) de type brancard comprenant deux tubes parallèles pour supporter les moyens de roulement. Ces deux tubes sont reliés par une première traverse (52) disposée devant la roue (14), à un niveau inférieur à la zone de support. La structure porteuse (5) peut être du type mécano soudé en tube creux de 32 mm de diamètre ayant des parois de 1,5 mm d'épaisseur. Comme illustré à la figure 10, un ensemble à roulette(s) (140) peut être associé à au moins un des pieds (51) pour utiliser le véhicule comme chariot. Cet ensemble se fixe par exemple sur un élément (70) reliant les branches du U d'un même pied (51).

La première ossature (53) et la seconde ossature (50) sont en partie coplanaires, les deux ossatures (50, 53) comprenant des segments parallèles reliés par des traverses (55) pour former dans un plan longitudinal la zone de support de la structure porteuse (5). La seconde ossature (50) présente un écartement entre les tubes inférieur à l'écartement de la bordure extérieure formée par la première ossature (53), sauf au niveau de la jonction avec le pied (51) où la seconde ossature (50) comporte des tubes d'extrémité alignés avec les bords latéraux (531, 532) de la première ossature (53).

Une seconde traverse (500) plus longue que la première traverse (52) est prévue pour relier les deux extrémités libres des tubes de la seconde ossature (50). Dans l'exemple des figures 1, 2 et 5, cette seconde traverse (500) est coplanaire avec la première ossature (53) et fait partie de la zone support. L'extrémité de la première ossature (53), les traverses (55) reliant les deux ossatures (50, 53) et la seconde traverse (500) peuvent constituer des zones d'ancrage pour les moyens de fixation amovible (6) servant à fixer les ensembles (11, 12, 13) d'éléments tubulaires sur la structure porteuse (5).

Dans un mode de réalisation de l'invention, des plaques percées pour recevoir des vis sont prévues à l'angle des jonctions entre portions (11) en U et des portions transversales (12) desdits ensembles (11, 12, 13). Ces plaques sont alignées avec les zones d'ancrage susmentionnées pour permettre un montage rapide des ensembles (11, 12, 13) d'éléments tubulaires sur la structure porteuse (5). Huit vis suffisent par exemple pour les opérations de montage ou démontage desdits ensembles (11, 12, 13) formant les ridelles principales (R1, R2). Les bras (16) peuvent aussi être rapidement raccordés et séparés des extrémités libres des tubes de la seconde ossature (50), à l'aide de systèmes à goupilles ou moyens de fixation rapide équivalents. L'encombrement en longueur de la brouette lors de son stockage ou de son transport est réduit grâce à ces moyens (160) de fixation amovible des bras (16). Les deux bras (16) démontables forment avec la seconde ossature (50) un brancard. Ces bras (16) peuvent comprendre des poignées antidérapantes ou organes de préhension équivalents pour faciliter les déplacements de la brouette.

En référence à la figure 2, chacun des deux ensembles d'éléments tubulaires (11, 12, 13) formant les ridelles (R1, R2) principales peut comporter des éléments de fixation (63, 64) pour recevoir une ridelle (R3, R4) d'extrémité avant ou arrière. Ces éléments de fixation (63, 64) comprennent par exemple des logements formés le long d'une branche verticale d'une portion (11) en U. A l'opposé du plan (A-A) de l'espacement (E) médian entre les ridelles principales (R1, R2), il est alors possible de fixer sans outils une ridelle (R3, R4) d'extrémité à l'aide de deux paires de crochets (61, 62) orientés selon une direction verticale descendante pour venir s'insérer dans les logements des éléments de fixation (63, 64).

La ridelle arrière (R3) et la ridelle avant (R4) peuvent être identiques. Pour éviter le glissement d'objets transportés, les ridelles avant et arrière (R3, R4), comportent des tubes (31, 41) horizontaux parallèles ou des moyens de retenue latérale équivalents. Ces tubes (31, 41) sont reliés à chacune de leurs extrémités à une branche d'accrochage (32, 42) agencée pour coopérer avec les éléments de fixation (63, 64). Chaque branche (32, 42) comporte par exemple des crochets d'insertion dans un logement situé sur une branche verticale de la portion (11) en U situé du côté opposé à l'espacement (E).

En référence à la figure 6, un conteneur (18) peut être associé aux arceaux pour le transport notamment de matériaux granuleux (terre, sable, gravier) ou peu volumineux (végétaux, feuilles mortes, et.). La brouette ou véhicule analogue comporte par exemple un conteneur amovible (18) doté d'au moins une collerette (181) permettant d'enserrer le bord supérieur d'un arceau des ridelles principales (R1, R2). Ce conteneur (18) peut être en matériau de type toile ou bâche. Dans un mode de réalisation de l'invention, des collerettes transversales (182) sont également prévues pour enserrer le dessus d'un tube (31, 41) horizontal des ridelles avant et arrière (R3, R4). Le conteneur (18) peut être souple et adaptable sur l'ensemble des ridelles (R1, R2, R3, R4). En outre, une bâche formant un toit souple (17) ou élément de couverture équivalent est prévu pour éviter des pertes lors du transport et/ou pour protéger le contenu des intempéries et salissures. Le conteneur (18) et la bâche de toit sont par exemple repliables pour faciliter leur transport/stockage. Naturellement un conteneur peut aussi être remplacé par deux conteneurs distincts (18) disposés de façon adjacente ou espacés entre les arceaux. La brouette peut aussi être équipée d'une cuve ayant en largeur les dimensions du volume délimité par les arceaux.

En référence aux figures 3A, 3B et 4B, la brouette peut comprendre au moins une béquille (21, 22) stabilisatrice de type repliable. Des moyens de rappel élastique (2) permettent de rabattre automatiquement la béquille (21, 22) vers une direction arrière lorsque la brouette est avancée. Chaque béquille (21, 22) est par exemple en forme de L et comprend dans sa partie supérieure une articulation avec un axe horizontal (X) de façon à ce que la partie inférieure de contact au sol de la béquille, en position dépliée, dépasse des bords longitudinaux de la structure porteuse (5) du véhicule. Les béquilles (21, 22) ont une fonction de sécurité très appréciable lors d'opérations de chargement, notamment en terrain pentu. La béquille en aval par rapport à la pente est alors en position dépliée. En outre, une bonne stabilité peut être obtenue en dépliant les deux béquilles, ce qui permet de découper de façon sûre le bois chargé dans la brouette.

Dans l'exemple des figures 3A et 3B, un élément porteur (20) d'un ressort (2) et solidaire de la béquille (21) pivote lors du dépliement de cette dernière. Ce mouvement de rotation provoque l'étirement du ressort (2), qui sollicite donc la béquille (21) pour la faire revenir dans sa position repliée. On comprend alors que l'avancée de la brouette et le glissement consécutif de la béquille vers l'arrière provoque automatiquement le repliement de la béquille jusqu'à sa position repliée. La figure 4B illustre cette position repliée, prise par la béquille de droite (22), alors que la béquille de gauche (21) est e appuis sur le sol en position dépliée.

Les béquilles (21, 22) sont par exemple rattachées à la première ossature (53), chaque bord latéral (531, 532) de la première ossature (53) étant doté d'un support d'articulation d'une béquille (21, 22) selon un axe (X) de rotation concourant avec l'axe (Y) de rotation de la roue (14). Ce support d'articulation (non représenté) permet de positionner la béquille (21, 22) entre la première ossature (53) et la roue (14) en position repliée. Par rapport à un plan vertical incluant l'axe (Y) de rotation de la roue (14), l'axe (X) d'articulation de la béquille est décalé d'un angle compris entre 5 et 20°, de sorte que la béquille (21, 22) se déporte sur le côté et s'éloigne de la roue (14) en position dépliée, comme illustré par la béquille de gauche (21) dans la figure 4B.

En référence aux figures 8A et 8B, l'utilisation de la béquille (21) rend possible une opération de chargement du véhicule en travers d'une pente. Le chargement peut ainsi être effectué sur un système stabilisé avec un polygone d'appui (PA, PC, PB, PX) formant un quadrilatère dans lequel s'inscrit le centre de gravité (CDG) de la charge. Comme illustré à la figure 8 B, la ligne passant par les points (PA, PB) d'appui de la roue (14) et du pied (51) aval fait office de charnière. Lorsque le centre de gravité (CDG) est situé au-delà de cette ligne, le polygone d'appui n'est plus un quadrilatère mais simplement le triangle formé par les points d'appui en aval (PA, PB, PX). On comprend que, sans la béquille (21), le véhicule se renverse dans ce cas de figure. Avec la béquille (21) ouverte, le véhicule orienté perpendiculaire à la pente peut être stationné sans risque de chute, le pied (51) en aval et la béquille (21) assurant une stabilisation latérale.

En référence à la figure 9, les ridelles (R1, R2) amovibles peuvent être remplacées par au moins un ensemble à plateau (7) amovible disposé à l'opposé des bras (16), pour que le véhicule constitue un diable. Dans le mode de réalisation de la figure 9, une première série de moyens de fixation (61) de ridelles (R1) principales est inutilisée et l'ensemble à plateau (7) est monté au-delà de l'espacement transversal (E), à l'aide de la deuxième série de moyens de fixation (62) de ridelles (R2) principales. La structure porteuse (5) comprend avantageusement des éléments répartis de part et d'autre d'un plan médian perpendiculaire à l'axe (Y) de rotation de la roue (14) pour supporter les ridelles (R1, R2) principales lorsque le véhicule selon l'invention est utilisé sous la forme d'une brouette ou d'un chariot par exemple. Chacune des séries de moyens de fixation (61, 62) est de préférence répartie de part et d'autre de ce plan médian. Chacune des ridelles (R1, R2) principales peuvent par exemple être fixées en au moins trois points, de préférence au moins quatre points, répartis sur lesdits éléments répartis de la structure porteuse (5), ces points de fixation formant géométriquement les sommets d'un polygone.

Un des avantages d'une brouette selon invention est de supprimer des manipulations fastidieuses pour le ramassage du bois de feu : le bois peut être coupé « en bottes ». Par exemple en forêt, cela permet de récupérer du bois de faible section sur le lieu de la coupe, car les manipulations seront réduites. Ce type de brouette est particulièrement adapté au débusquage de petit bois dans des opérations d'éclaircies ou de balivage. Le bois placé entre les ridelles principales (R1, R2) peut être non seulement découpé par les extrémités extérieures de ridelles (R1, R2), c'est-à-dire à l'avant et à l'arrière, mais aussi par le milieu grâce aux ouvertures médianes de l'espacement transversal (E).

En outre, la légèreté de la brouette (masse à vide de l'ensemble de l'ordre de 34 kg) et son faible encombrement en largeur permet une bonne maniabilité et autorise le passage dans une porte de 70 cm de large. L'accès à des locaux par des passages étroits permet d'amener le bois sur le lieu d'utilisation finale, près d'une chaudière par exemple. Enfin, le caractère démontable avec le minimum d'outils confère à l'invention un avantage pratique pour l'utilisateur et une réduction de l'encombrement lors du stockage ou du transport de la brouette.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

1. Véhicule à traction manuelle pour transporter un contenu, comprenant une structure porteuse (5) définissant au moins une zone de support et prolongée par des bras (16), des moyens de roulement comprenant au moins une roue (14) disposée sous la zone de support et mobile en rotation selon un axe déterminé (Y), des ridelles (R1, R2) latérales solidaires de la structure porteuse (5), **caractérisé en ce que** la structure porteuse (5) comprend des éléments répartis de part et d'autre d'un plan médian perpendiculaire à l'axe (Y) de rotation de la roue (14) pour supporter les ridelles (R1, R2) latérales qui s'étendent selon une direction ascendante à composante verticale depuis la zone de support, les ridelles (R1, R2) étant fixées de façon amovible sur lesdits éléments répartis et comprenant au moins deux ensembles d'éléments tubulaires (11, 12, 13) séparés par un espacement transversal (E) incluant un plan (A-A) sensiblement vertical parallèle à l'axe (Y) de rotation de la roue (14).

2. Véhicule selon la revendication 1, dans lequel des arceaux des ridelles (R1, R2) sont disposés latéralement sur le véhicule.

3. Véhicule selon la revendication 1 ou 2, dans lequel les ensembles d'éléments tubulaires (11, 12, 13) comportent chacun :
- deux portions (11) en U de support et de retenue latérale du contenu à transporter, comprises dans un plan parallèle à l'axe (Y) de rotation de la roue (14) ;
- des portions (12, 13) de raccordement entre lesdites portions (11) en U ; et
- des moyens de fixation (6) prévus pour le rattachement d'un ensemble d'éléments tubulaires (11, 12, 13) à la structure porteuse (5).

4. Véhicule selon la revendication 3, dans lequel les ridelles (R1, R2) comprennent des paires d'arceaux en vis-à-vis, des portions de raccordement (13) formant avec les branches des portions (11) en U lesdits arceaux.

5. Véhicule selon une des revendications 1 à 4, dans lequel la zone de support est également séparée en deux par un décrochement dans le prolongement du plan (A-A) de l'espacement transversal (E), ce décrochement étant destiné à recevoir un élément mobile (P) consommable.

6. Véhicule selon une des revendications 1 à 5, dans lequel l'espacement transversal (E) est suffisamment grand pour permettre de poser transversalement un élément mobile (P) consommable à taquets sur la zone de support, entre deux ensembles d'éléments tubulaires (11, 12, 13), l'élément mobile (P) ayant une épaisseur suffisante de l'ordre de 2 cm et une largeur suffisante supérieure à 10 cm pour protéger la structure porteuse (5) lors d'une découpe effectuée à travers ledit espacement vertical (E).

7. Véhicule selon une des revendications 1 à 6, dans lequel la structure porteuse (5) comporte une paire de pieds (51) en forme de U, chaque pied (51) étant relié d'une part, par une branche avant du U, à une première ossature (53) en C formant une bordure extérieure de la structure porteuse (5) et d'autre part, par une branche arrière du U, à une seconde ossature (50) de type brancard comprenant deux tubes parallèles pour supporter les moyens de roulement, une première traverse (52) disposée devant la roue (14) reliant les deux tubes de la seconde ossature (50).

8. Véhicule selon la revendication 7, dans lequel une seconde traverse (500) plus longue que la première traverse (52) est prévue pour relier deux extrémités libres des tubes de la seconde ossature (50), ces extrémités libres comprenant des moyens (160) pour fixer de façon amovible des bras (16).

9. Véhicule selon la revendication 7 ou 8, dans lequel la première ossature (53) et la seconde ossature (50) sont en partie coplanaires, les deux ossatures (50, 53) comprenant des segments parallèles reliés par des traverses (55) pour former dans un plan longitudinal la zone de support de la structure porteuse (5).

10. Véhicule selon une des revendications 1 à 9, dans lequel chacun des ensembles d'éléments tubulaires (11, 12, 13) des ridelles (R1, R2) comprend des éléments de fixation (63, 64) sur une desdites portions (11) en U pour recevoir une ridelle (R3, R4) d'extrémité avant ou arrière.

11. Véhicule selon la revendication 10, dans lequel lesdits éléments de fixation (63, 64) comprennent des logements formés le long d'une branche verticale d'une portion (11) en U, une ridelle (R3, R4) d'extrémité comprenant deux paires de crochets (61, 62) orientés selon une direction verticale descendante pour venir s'insérer dans lesdits logements.

12. Véhicule selon une des revendications 1 à 11, comprenant des moyens de fixation amovible (6) pour fixer chaque ensemble d'éléments tubulaires (11, 12, 13) à la structure porteuse (5), ces moyens de fixation amovible (6) comportant des éléments d'ancrage dans l'extrémité de la première ossature (53), dans les traverses (55) reliant les deux ossatures (50, 53) et dans la seconde traverse (500).

13. Véhicule selon une des revendications 1 à 12, comprenant au moins une béquille (21, 22) de stabilisation au sol de type repliable, des moyens de rappel élastique (2) étant prévus pour rabattre automatiquement la béquille (21, 22) vers une direction arrière lorsque le véhicule est avancé.

14. Véhicule selon la revendication 13, dans lequel la béquille (21, 22) est en L et comprend dans sa partie supérieure une articulation avec un axe horizontal (X) de façon à ce que la partie inférieure de contact au sol de la béquille, en position dépliée, dépasse des bords longitudinaux de la structure porteuse (5) du véhicule.

15. Véhicule selon la revendication 7, dans lequel des béquilles (21, 22) sont rattachées à la première ossature (53), chaque bord latéral (531, 532) de la première ossature (53) étant doté d'un support d'articulation d'une béquille (21, 22) selon un axe (X) de rotation concourant avec l'axe (Y) de rotation de la roue (14), permettant de positionner la béquille (21, 22) entre la première ossature (53) et la roue (14) en position repliée.

16. Véhicule selon une des revendications 4 à 15, comprenant un conteneur amovible (18) en matériau de type toile ou bâche doté d'au moins une collerette (181) prévue pour coopérer avec un bord supérieur des arceaux, l'écartement entre les arceaux des ridelles (R1, R2) latérales étant sensiblement constant et inférieur à 65 cm.

17. Véhicule selon la revendication 1, **caractérisé en ce que** les ridelles (R1, R2) amovibles sont remplacées par au moins un ensemble à plateau (7) amovible disposé à l'opposé des bras (16), au-delà de l'espacement transversal (E), pour que le véhicule constitue un diable.
